# EUROPÄISCHE PATENTSCHRIFT

(11) **EP 1 825 648 B1**
(45) Veröffentlichungstag und Bekanntmachung des Hinweises auf die Patenterteilung: **24.01.2018**
(21) Anmeldenummer: 04804756.7
(22) Anmeldetag: 09.12.2004
(51) Int. Cl.: H04W 12/06, H04W 4/24

(54) **ZUGANGSVERFAHREN IM WLAN VON IP-MOBILFUNKTELEFON MIT AUTHENTIFIZIERUNG MITTELS HLR**
ACCESS METHOD IN A WLAN FOR AN IP MOBILE TELEPHONE WITH AUTHENTICATION BY MEANS OF AN HLR
PROCEDE D'ACCES DANS UN RESEAU LOCAL SANS FIL POUR UN TELEPHONE RADIOMOBILE IP AVEC AUTHENTIFICATION A L'AIDE D'UN REGISTRE DES ABONNES LOCAUX

(43) Veröffentlichungstag der Anmeldung: 29.08.2007
(73) Patentinhaber: Togewa Holding AG, 3000 Bern 32 (CH)
(72) Erfinder: HEUTSCHI, Walter, CH-3303 Jegenstorf (CH); STADELMANN, Toni, CH-3065 Bolligen (CH); ZBÄREN, Peter, CH-3126 Kaufdorf (CH)
(74) Vertreter: Buntz, Gerhard
(86) Internationale Anmeldenummer: PCT/EP2004/053383
(87) Internationale Veröffentlichungsnummer: WO 2006/061049

(56) Entgegenhaltungen:
- WO-A-2004/017564
- WO-A-2004/017565

## Beschreibung

Die vorliegende Erfindung betrifft ein Verfahren und ein System für IP-basierte Telefonie und Bildtelefonie, bei welchem IP-Nodes vor der Registrierung im IP-basierten Netzwerk auf Grund von Authentifizierungsdaten von einem Identifikationsmodul authentifiziert werden.

IP-basierte Telefonie ist eine Technologie, welche sich in den letzten Jahren zu einer reellen Alternative zur herkömmlichen Sprachübertragung in leitungsvermittelten Telefonienetzen entwickelt hat. Während herkömmliche Telefongespräche als kontinuierlicher Datenstrom über ein Telefonnetz übertragen werden, werden bei der IP-basierten Telefonie Sprachdaten in Pakete zerlegt und über ein Datennetzwerk einzeln übertragen. Nach der Zerlegung grosser Mengen an akustischen Informationen und Übertragung über das Netzwerk, werden diese kleinen Pakete auf der Empfangsseite wieder zusammengesetzt. Auf diese Weise können Telefoniedienste mit dem Datennetz zusammengelegt werden, wodurch die Installation und Pflege eines separaten Telefonnetzes enfällt, da IP-basierte Telefone über eine entsprechende Schnittstelle an ein Datennetz angeschlossen werden und mittels passender Netzwerkprotokolle Sprachdaten übertragen können. Ein weiterer wichtiger Vorteil von IP-basierter Telefonkommunikation gegenüber herkömmlicher Telefonie ist der Angebot an neuen, erst durch die IP-basierte Technologie ermöglichten Dienste, die einen Mehrwert gegenüber der herkömmlichen Telefonie darstellen. Unter anderem bietet die IP-basierte Telefonie eine automatische Verschlüsselung der Sprachkommunikation, welche abhörsichere Gespräche ermöglicht. Diese Entwicklung der IP-basierten Telefonie hat auch einen Einfluss gehabt auf die parallele Entwicklung der IP-basierten Bildtelefonie als alternative zu herkömmlichen Videokonferenz-Technologie. Immer schnellere Datenverbindungen erlauben heute simultane Übertragung von Bild und Ton in hervorragender Qualität. Bei der IP-basierten Bildtelefonie werden auch wie bei der IP-basierten Telefonie Sprach-und Bilddaten in Pakete zerlegt, über ein IP-basiertes Netzwerk geschickt und beim Empfänger wieder zusammengesetzt.

Gleichzeitig hat die rasante Entwicklung der drahtlosen Datennetzwerke (WLAN 802.11, Bluetooth etc.) und eine zunehmende Anzahl von sogenannten Hotspots im öffentlichen Bereich (beispielsweise in Flughäfen, Bahnhöfen, Konferenzzentren, Messe- und Ausstellungsgeländen, stark frequentierten Plätzen in den Städten) dazu geführt, dass IP-fähige Geräte heute über eine Mobilität verfügen können, die nur mit den heutigen Mobilfunknetzen (GSM, UMTS etc.) vergleichbar ist. Drahtloser Zugang zu Diensten wie Internet ist heute bereits eine Selbstverständlichkeit. Zudem werden seit einiger Zeit auch IP-basierte Mobiltelefone angeboten, welche mobile IP-basierte Telefonie über ein lokales drahtloses Netzwerk ermöglichen. Diese mobilen IP-Telefone existieren bereits auch in Ausführungen mit integrierten Kameras, wodurch wiederum mobile IP-basierte Bildtelefonie in greifbare Nähe rückt.

Zum Kommunikationsaufbau und Datenaustausch in Telefonie- und/oder Bildtelefonie-Netzwerken müssen von allen Netzwerkkomponenten bestimmte Normen eingehalten werden, die in Protokollen bzw. Protokollfamilien festgelegt sind. Im Stand der Technik sind beispielsweise das Protokoll E-DSS1 (Euro-ISDN) für die leitungsvermittelte Telefonie-Netzwerke oder die Protokolle H.323, SIP, MEGACO bzw. MGCP für die IP-basierte Telefonie und/oder Bildtelefonie bekannt.

Eines der am häufigsten Verwendeten Protokolle für die IP-basierte Telefonie und/oder Bildtelefonie ist das Session Initiation Protocol (SIP, IETF RFC 3261, früher RFC 2543). Es ist durch die Internet Enginieering Task Force (IETF) zum ersten Mal in 1999 spezifiziert worden. Dieses Netzwerkprotokoll hat eine sehr leichte Struktur und ist stark am HTTP (Hypertext Transfer Protocol) angelehnt. Es ermöglicht den Aufbau einer Kommunikationssitzung zwischen zwei und mehr Teilnehmern. Es handelt es sich aber um ein reines Initiierungsprotokoll. Zum Datenaustausch verwenden SIP-basierte Telefonie- und/oder Bildtelefonie-Systeme andere Protokolle, insbesondere SDP (Session Description Protocol, IETF RFC 2327) und das RTP (Realtime Transport Protocol, IETF RFC 1889). SDP dient insbesondere dazu, die zwischen den Endpunkten zu verwendenden Audio- und/oder Video-Codecs, Transportprotokolle usw. auszuhandeln. Aufgabe von RTP ist es, den Multimedia-Datenstrom (Audio, Video, Text usw.) zu transportieren, d.h. die Daten zu kodieren, in Pakete zu zerlegen und zu versenden. Kommunikations-Endpunkte in einem SIP-basierten System werden User Agents genannt. Unter einem User Agent Client (UAC) versteht man eine Komponente, die eine SIP-Anfrage (Request) initiiert, der User Agent Server (UAS) erwidert diese Anfrage mit einer Antwort (Response). Ein User Agent (UA) kann sowohl die Rolle des UAC als auch des UAS einnehmen. Requests, von welchen eine limitierte Anzahl gegeben ist, werden grundsätzlich durch Responses (rund hundert verschiedene) erwidert. Sie tragen lediglich Nummern zur Unterscheidung. Ein User Agent sendet eine SIP-Nachrichten vorab an einen SIP-Proxy. Anhand der angegebenen Adresse entscheidet der Proxy, wohin die Nachricht geschickt werden muss und leitet sie weiter. Diese Proxies können grundsätzlich zustandslos (stateless) oder zustandsbehaftet (stateful) sein. Während Stateless Proxies Nachrichten lediglich weiterleiten und eigentlich nicht mitbekommen, dass beispielsweise ein Gespräch aufgebaut wird, können Stateful Proxies Aufgaben übernehmen, die beim Aufbau eines Gesprächs hilfreich sind. Eine der wichtigsten Aufgaben eines Stateful Proxy ist das Verteilen von Anrufen auf verschiedene Ziele: Beim sogentannten "Sequential Forking" werden die möglichen Anrufziele nacheinander angewählt, beim "Parallel Forking" bekommen alle Destinationen gleichzeitig eine Nachricht. Eine weitere unerlässliche Komponente eines SIP-basierten Systems ist ein SIP-Registrar, bei welchem sich alle User Agents registrieren müssen. Diese logische Einheit führt eine Datenbank mit Informationen über die angemeldeten User Agents und lenkt Anfragen auf diese Ziele um. In der Regel sind Registrar und Proxy dasselbe Programm, welches die Umleitung intern regelt, ohne dass Nachrichten ausgetauscht werden müssen. Schliesslich umfasst ein SIP-basiertes System auch einen Redirect Server oder Gateway, der unter anderem die Verbindung zwischen dem IP-basierten Telefonie-Netzwerk und dem PSTN gewährleistet.

Bei der Registrierung verwendet SIP die Register-Methode. Der UA gibt an, wo er zu erreichen ist und erhält die Bestätigung mit dem Code 200 (OK). Falls der Benutzer nicht bekannt ist, wird 404 (Not Found) zurückgegeben, falls die Registrierung nicht erlaubt, lautet die Antwort 403 (Forbidden). Die Voraussetzung für eine erfolgreiche Registrierung ist jedoch eine erfolgreiche Authentifizierung des User Agents im entsprechenden Netzwerk und die Über prüfung seiner Autorisierung für gewünschte Dienste. Hierzu werden in einer SIP-basierten Umgebung meistens Authentifizierungs- und Autorisierungsmethoden RADIUS und/oder DIAMETER eingesetzt, welche auch bei vielen anderen Netzwerkfunktionen zum Einsatz kommen.

Das Authentifikationsprotokoll RADIUS (Remote Authentication Dial-In User Service - IETF RFC 2138, 2868) wird heute in vielen Netzwerkeinheiten, wie z.B. Router, Modemserver, Switch etc. verwendet. Der Authentifizierungs-Client sendet seinen Benutzernamen und sein Passwort an den RADIUS-Server. Der RADIUS-Server überprüft diese Information und autorisiert den Benutzer zum System. Der Grund für die Verbreitung von RADIUS liegt u.a. darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzem (Hinzufügen, Löschen von Benutzern etc.). So ist das z.B. bei ISP (Intemet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten per manenten Schutz vor Hackern. Die Remoteauthentifizierung von RADIUS basierend auf TACACS+ (Terminal Access Controller Access Control System+) und LDAP (Lightweight Directory Access Protocol) ist gegen Hacker relativ sicher. Viele andere Remote Authentifizierungsprotokolle haben dagegen nur einen zeitweisen, ungenügenden oder gar keinen Schutz vor Hackerangriffen. Ein anderer Vorteil von RADIUS ist die Tatsache, dass sich RADIUS lange Zeit der de-facto Standard für Remote Authentifizierung war, womit RADIUS auch von fast allen Systemen unterstützt wird.

Mit der Zunahme der Komplexität der geforderten Dienste erwies sich RADIUS jedoch als ungeeignet zur Nutzung in grösseren Netzwerken. Dies machte die Entwicklung eines neuen Protokolls notwendig. Das Diameter Protokoll (IETF RFC 3588) wurde aber nicht von Grund auf neu entwickelt, sondern ein Grossteil des RADIUS-Protokolls wurde erhalten und dessen Fehler beseitigt. Diameter nutzt wie RADIUS Attribut/Wert Paare (AVP) zur Vermittlung von Daten und UDP als Transportprotokoll. Darüber hinaus ist es durch das Hinzufügen neuer Befehle und AVPs erweiterbar. Es stellt ein Basis-Protokoll dar, das die Minimalanforderungen eines Authentifizierungs-Transportprotokolls erfüllt. Daher ist es nicht dafür gedacht, alleine eingesetzt zu werden, sondern sollte immer mit einer anwendungsspezifischen Erweiterung benutzt werden. Diameter ist ein peer-to-peer-Protokoll. Der Diameter client initiiert normalerweise eine Authentifizierungs- oder Authorisierungs-Anfrage eines Nutzers. Der Diameter Server nimmt diese Anfrage entgegen und beantwortet sie entweder oder leitet sie an einen Proxy-Server weiter. Der mobile Node fordert den gewünschten Dienst mittels der Authentifizierungs-Request-Nachricht (AMR), die die AVPs enthält, an. Die zur Authentifizierung benötigten Informationen werden aus dieser Nachricht extrahiert und in Diameter AVPs eingeschlossen. Diese Nachricht wird an den lokalen Diameter-Server, der AAAF bezeichnet wird, weitergeleitet. Der AAAF leitet die Nachricht an den Authentifizierungs-Home-Server (AAAH) weiter. Kann der AAAH den Benutzer erfolgreich authentifizieren, sendet er einen Home-Agent-MIP-Request (HAR) an einen Home Agent. Dieser Home Agent verarbeitet nach Erhalt der HAR zuerst die Diameter-Nachricht und erstellt dann die Antwort HAA mit den benötigten Daten, wie Session-ID usw. und sendet sie an den AAAH. Dieser erstellt die Autentifizierungs-Antwort (AMA), die unter anderem Informationen für das Tunneln von Nachrichten enthält, und sendet sie an den AAAF. Damit ist die Verbindung aufgebaut. Die Mobile-IP-Erweiterung definiert darüber hinaus zahlreiche Sonderfälle, wie die Behandlung von Handoffs.

Zusätzlich zu den Authentifizierung und Autorisierung stellt sich in einem Netzwerk für IP-basierte Telefonie und/oder Bildtelefonie die Frage nach geeigneten Billing-Mechanismen. TAP-Protokoll (Transferred Account Procedure) der Transferred Account Data Interchange Group (TADIG) der GSM-Vereinigung ist das Protokoll, welches im Stand der Technik für das Billing der von mobilen Einheiten beanspruchten Leistung in GSM-Netzwerken bekannt ist. Ein sehr wichtiges Konzept in den GSM-Netzwerken ist das Roaming, eine Methode, welche es einem Benutzer eines Mobilfunkgeräts erlaubt, sein Mobilfunkgerät nicht nur in seinem ursprünglichen Netzwerk, sondern in jedem beliebigen Netzwerk im In- oder Ausland zu benutzen. Diese Methode verlangt aber ein Billing-Konzept, welches die Komplexität der Protokolle und die verschiedene angebotene Dienste fehlerfrei unter einen Hut bringen kann. Daher dürfen die Billing-Methoden für GSM-Netzwerke keinesfalls trivial sein. Heute sind weltweit mehr als 400 GSM-Netzwerke in Betrieb und dazu existieren schätzungsweise mehr als 20'000 individuelle Roaming-Vereinbarungen zwischen den einzelnen Netzwerkbetreibern. Um das Billing zu ermöglichen liegt folglich hinter der scheinbar einfachen Idee des Roamings ein äusserst komplexer Prozess von Informationserfassung, Informationsverteilung und Informationsauswertung. In diesem Zusammenhang dient das Transferred Account Procedure Protokoll (TAP) dem Austausch von Roaming Billing Informationen zwischen den einzelnen Mobilfunknetzdienstanbietern. Am 04. Juni 2000 wurde nach TAP2 und TAP2+ schliesslich TAP3 lanciert. Es existieren bereits Unterversionen TAP3.1 und TAP 3.2. TAP3 kann heute als der Standard bezeichnet werden, obwohl TAP ein sich weiterentwickelndes Protokoll ist.

Der meiste Voice- oder Datenverkehr in GSM-Netzwerken kommt oder endet in einem anderen Netzwerk, als der mobile Benutzer zur Zeit ist. Der Betreiber eines lokalen Netzwerkes erhebt Gebühren für jeden Anruf, der bei einem seiner Benutzer endet, unabhängig davon, ob es sich um ein Festnetz oder ein Mobilfunknetz handelt. Zur Vereinfachhung der Gebürenerhebung gehen die lokalen Fixnetzbetreiber mit den lokalen Mobilfunknetzbetreibern gegenseitig Übereinkommen ein. So müssen ein Mobilfunknetzbetreiber in einem Land kein Übereinkommen mit dem Festnetzanbieter in einem anderen Land abschliessen, damit ein Anruf aus dem Mobilfunknetz des ersten Anbieters zum Festnetz des zweiten Anbieters zu verrechnen. Normalerweise hat der Festnetzanbieter im ersten Land mit dem Festnetzanbieter im zweiten Land bereits ein Übereinkommen betreffend Verrechnungsart und Gebühren geschlossen, so dass dann der Mobilfunknetzbetreiber im ersten Land seine Dienste über den Festnetzanbieter mit einer entsprechenden Vereinbarung verrechnen kann. Die Kosten werden üblicherweise entweder direkt (retail billing) oder über einen Service Provider (wholesale billing) dem Benutzer verrechnet. Die Art des Verrechnens von Roaming-Daten- oder Voiceverkehr zwischen unterschiedlichen Mobilfunknetzen (PMN: Public Mobile Network) erfolgt mittels des TAP-Protokolls. Roaming Call Records werden typischerweise entweder als TAP oder als CIBER (Cellular Intercarrier Billing Exchange Roamer) Records erstellt. CIBER Records werden von Mobilfunknetzbetreibern benutzt, welche mit AMPS basierenden Technologien arbeiten, wie z.B. AMPS, IS-136 TDMA und IS-95 CDMA. TAP wird vor allem von GSM / UMTS-Mobilfunknetzdienstanbieter benutzt und ist das Hauptprotokoll für Verrechnungen in GSM / UMTS-dominierten Gebieten.

Details eines Anrufes durch einen Benutzer, der sich in einem fremden Netzwerk (VPMN: Visited Public Mobile Network) befindet, wird in einem Mobile Switching Center (MSC) des Netzwerkes registriert. Jeder Anruf erzeugt so ein oder mehrere Anrufrekords. Der GSM-Standard für diese Rekords ist in GSM 12.05 definiert, obwohl viele Anbieter ihre eigenen Formate benutzen. Die Anrufrekords des MSC werden zu einem Billing-System des VPMN zur Verrechnung übertragen. Diese Anrufrekords werden dann in TAP-Format konver tiert und dem entsprechenden Benutzer zugeordnet. Spätestens innerhalb einer vordefinierten Zeit (z.B.:36 Stunden) werden die TAP-Rekords an den entsprechenden Mobilfunknetzdienstanbieter versandt. Die TAP-Files enthalten zusätzlich Informationen bezüglich des Anbieter-Leistungstarifs (IOT: Inter Operator Tariff) und alle weiteren bilateralen Vereinbarungen und Vergünstigungsschemen. Die TAP-Rekords werden direkt oder üblicher über ein Verrechnungsstelle, wie z.B. ein Clearinghaus, geschickt. Erhält der Heimnetzwerkbetreiber (HPMN: Home Public Mobile Network) ein TAP-Rekord vom VPMN, wird dieses in ein entsprechendes internes Format konvertiert und zusammen mit den normalen Anrufrekords des Benutzers, welche er im Heimnetzwerk erzeugt, verrechnet. Bei Wholesale Billing, bei dem ein Service Provider die anfallenden Kosten dem Benutzer verrechnet, leitet das HPMN die Records weiter an den Service Provider, der die Anrufe insbesondere auch gemäss eigenen Tarifen neu verrechnen kann und die Abrechnung mit z.B. Anrufdetails für den Benutzer erzeugt.

TAP3 unterstützt eine Vielzahl von Diensten. TAP3 wird heute für das Billing zwischen GSM / UMTS-Dienstanbietern und GSM / UMTS-Dienstanbietern, GSM / UMTS-Dienstanbietem und Nicht-GSM-Dienstanbietern (Inter-Standard Roaming) und GSM-Dienstanbietern und Satelliten-Dienstanbietern etc. verwendet. Die drei grundlegenden Dienstkategorien Voice, Fax und sog. Supplementary Services werden bereits seit TAP1 unterstützt. Das Billing von Short Message Service (SMS) ist wegen der Benutzung von Short Message Service Center (SMS-C) Dritter hingegen weniger trivial. Folgende Gründe erschweren das Billing von SMS: 1. Ein Roaming-Benutzer kann während dem Roaming eine SMS empfangen (MT-SMS), 2. Ein Roaming-Benutzer kann während dem Roaming eine SMS (MO-SMS) versenden, indem er die SMS-C seines Heimnetzwerkes benutzt und 3. Ein Roaming-Benutzer kann während dem Roaming eine SMS (MO-SMS) versenden, indem er die SMS-C eines fremden Netzwerkes benutzt. Das Billing von SMS-Diensten wird deshalb erst ab TAP2+ voll unterstützt. Ab TAP3 wird weiter das Billing von Circuit Switched Data, HSCSD (High Speed Circuit Switched Data) und GPRS (General Packet Radio Service) unterstützt. TAP3 unterstützt ebenfalls alle Value Added Services (VAS), wie z.B. das sog. Billing for Content. Das Verrechnen von Value Added Services ist jedoch häufig schwierig, da es das Einver ständnis des Dienstanbieters zu den verrechneten Diensten voraussetzt. Customised Application Mobile Enhanced Logic (CAMEL) wird seit der Einführung von TAP3.4 unterstützt. CAMEL ist besonders für Anwendungen bei Prepaid-Diensten für Roaming Benutzer wichtig und dürfte in Zukunft stark an Bedeutung gewinnen. Eine andere wichtige Anwendung von TAP3 ist die Unterstützung von Verrechungen gestützt auf Inter Operator Tariff (IOT). IOT ermöglicht dem Heimnetzwerkdienstanbieter (HPMN) spezielle Angebote und Tarife eines fremden Dienstanbieters (VPMN) zu überprüfen und an den Roaming-Benutzer weiterzugeben. So kann z.B. der VPMN Vergünstigungen oder Discounts für unterschiedliche Anrufdienste oder -levels geben und der HPMN kann diese einfach verifizieren und seine Tarife anpassen. Die Möglichkeit des Verrechnens von Roaming-Diensten unabhängig davon, wo sich der Benutzer gerade befindet, ist ein wertvolles Hilfsmittel für Mobilnetzdienstanbieter und verhindert den Verlust von Einnahmen bei zwischenzeitlichen Vergünstigungen durch einen VPMN. Das TAP-Protokoll umfasst ab TAP3 ebenfalls detaillierte Informationen, von wo ein Anruf genau getätigt wurde, bzw. ein Dienst in Anspruch genommen wurde etc., und wo er hingeleitet wurde. Diese Information hilft ein Profil des jeweiligen Benutzers basierend auf seinem Verhalten aufzustellen, was wichtige Informationen liefert, um das Angebot der Dienste auf die Bedürfnisse der Benutzer anzupassen und zu optimieren. Insbesondere kann es dazu verwendet werden, spezielle Location Based Services, wie z.B. Sport- oder Konzertveranstaltungen etc., anzubieten. Schliesslich erlaubt mit dem Returned Accounts Procedure (RAP) Protokoll TAP3 auch ein differenziertes Errorhandling. So kann mit RAP der HPMN u.a. eingehende TAP-Files auf ihre Gültigkeit und Konformität mit dem TAP-Standart überprüfen und falls notwendig partiell verwerfen, ohne dass damit Verrechnungen von Leistungen verloren gingen die fehlerfrei übertragen wurden.

An der Schnittstelle zwischen der IP-basierten Telefonie- und/oder Bildtelefonie und den herkömmlichen Telefonie-Netzwerken müssen grundsätzlich ähnliche Fragen wie bei den Verrechnung von Gesprächen zwischen zwei verschiedenen Mobilfunknetzbetreibern gelöst werden. Erstens gibt es typischerweise eine Vielzahl an Betreibern, wobei man in der Praxis davon ausgehen kann, dass jeder dieser Betreiber ein eigenes Tarifmodell verwendet. Zweitens kann ein Kunde eines Betreibers beliebige Kunden von anderen Betreibern anrufen, was sich in höheren Gesprächsgebühren niederschlagen wird. Allgemeine Richtlinien zur Durchführung der Ausgleichszahlungen können z.B. in der ITU-Recommendation D.196 nachgelesen werden. Für eine einheitliche Vorgehensweise beim Clearing und Settlement existieren jedoch keine öffentlich zugänglichen Standards und Protokolle. Weiters existieren mehrere Anbieter für ein Clearing House, die insbesondere von Mobilfunkbetreibern zur Abrechnung von Roaming-Gebühren verwendet werden können. Alle diese Anbieter haben jedoch gemeinsam, dass ebenfalls keine öffentlich zugänglichen Standards verwendet werden.

Damit ein Gespräch zwischen zwei Providern über eine zentrale Stelle vergebührt werden kann, müssen alle Provider ein einheitliches Protokoll verwenden. Die Firma TransNexus hat für diese Zwecke das Open Settlement Protocol (OSP) spezifiziert, welches von ETSI in ihrer TIPHON-Spezifikation zum Standard erklärt worden ist. OSP definiert einerseits ein Grundgerüst für einen standardisierten Informationsaustausch. Andererseits sieht die Spezifikation auch bewusst vor, dass Teile des Protokolls ersetzt bzw. erweitert werden können. Somit können spezielle Anforderungen und betreiberspezifische Dienste ebenfalls integriert werden.

Als Übertragungsprotokoll beim OSP wird eine Kombination aus HTTP und S/MIME eingesetzt. Zur Übertragung wird die POST-Methode von HTTP verwendet. Es existiert zwar auch die PUT-Methode, um Daten per HTTP zu einem Server zu übertragen. Jedoch ist es nur mittels der POST-Methode möglich, die mitgesendeten Daten einer bestimmten serverseitigen Ressource zuzuweisen, welche dieWeiterverarbeitung der Daten durchführt Weiters besteht der Inhalt der übertragenen Daten aus einer S/MIME-Nachricht. Um OSP-Nachrichten mit einem Clearing House abzugleichen, existieren zwei Betriebsarten: Der Online Mode und der Bulk Mode. Im Online Mode besteht während der Durchführung eines Gesprächs zwischen den verschiedenen Netzwerkbetreibem eine Verbindung zum Clearing House. Der Grund für diesen Ansatz ist, dass vom Clearing House einige Aufgaben für das Zustandekommen des Anrufs übernommen werden können. Sollte z.B. das dem Anrufer zugehörige Backend Service zu wenig Informationen über das Ziel des Gesprächs besitzen, kann das Clearing House Routingentscheidungen treffen und eine Kontaktadresse des Ziel-Gatekeepers liefern. Weiters ist es denkbar, die Funktionalität eines Service Area Broker (SAB) in das Clearing House zu integrieren. Die Aufgabe eines SAB ist die Ermittlung des günstigsten Weges für den Aufbau des Gesprächs, wobei uhrzeitabhängige Tarife und aktuelle Belastungen der Netzwerke berücksichtigt werden können. Der Nachteil des Online Mode ist jedoch eine Vergrösserung der Verzögerungszeit für den Verbindungsaufbau, denn schliesslich muss der Gatekeeper des Anrufers nicht nur auf verschiedene Antworten des eigenen Backend Service warten, sondern in Folge auch auf die Antworten des Clearing House. Im Bulk Mode wird hingegen nur zu vorgegebenen Zeiten eine Verbindung zum Clearing House aufgebaut. Ein Vorteil dieser Methode ist, dass ein vom Gatekeeper unabhängiger Prozess die CDRs aus dem Backend Service auslesen und am Stück zum Clearing House übertragen kann. Ein weiterer Vorteil im Gegensatz zum Online Mode ist, dass ein vorübergehender Ausfall des Clearing House keine nennenswerten Störungen des eigenen Systems zur Folge hat. Denn sollte ein Transfer von CDRs abgebrochen werden bzw. nicht zustandekommen, so kann er einfach zu einem späteren Zeitpunkt wiederholt werden. Als wesentlicher Nachteil ist jedoch ersichtlich, dass ein Clearing House im Bulk Mode nicht als SAB fungieren kann. Weiters können keine Routingentscheidungen vom Clearing House übernommen wer den, weil dies ebenfalls nur im Online Mode erfolgen kann. Die wichtigsten Komponenten einer OSP-Nachricht sind der Pricing Exchange, Authorisation Exchange und Usage Exhange. Pricing Exchange umfasst den Informationsaustausch für die Kosten eines Telefongesprächs. Dieser Pricing Exchange besteht aus der Übertragung einer Pricinglndication, welche mit einer PricingConfirmation bestätigt werden muss. Der Authorization Exchange wird durchgeführt, wenn Ressourcen vom Clearing House benutzt werden sollen. Üblicherweise entspricht dies einer Autorisation für den Aufbau eines Telefongesprächs. Wie der Pricing Exchange basiert auch der Authorization Exchange auf dem Senden eines AuthorizationRequest, welcher mit einem AuthorizationResponse bestätigt wird. Der Usage Exchange beinhaltet eine Beschreibung der benutzten Ressourcen. Dazu wird eine Usagelndication gesendet, welche mit einer U-sageConfirmation bestätigt wird. Da seitens OSP noch keine Dienste unterschieden werden können, ist unter dem Begriff Usage die Gesprächszeit für ein geführtes Telefonat zu verstehen.

WO 2004/017564 A1 aus dem Stande der Technik zeigt ein Verfahren für automatisches Roaming zwischen heterogene WLANs, bei welchem ein mobiler IP-Node bei einem Access Point Zugriff auf das WLAN fordert und bei welchem der mobile IP-Node auf einen Request des Access Servers zur Authentifizierung eine auf einer SIM-Karte des mobilen IP-Nodes gespeicherte IMSI an den Access Server übermittelt. Basierend auf der IMSI wird mittels von in einer SIM-Benutzerdatenbank abgespeicherten Informationen der logische IP-Datenkanal des WLAN zu entsprechenden GSM-Daten für Signal- und Datenkanäle eines GSM-Netzwerkes benutzerspezifisch ergänzt und die Authentifizierung des IP-Nodes bei einem HLR eines GSM-Netzwerkes durchgeführt. Das in WO 2004/017564 A1 gezeigte Verfahren richtet sich dabei auf die Access Server charakteristische Authentifizierung und Registrierung im Access Server der WLAN beim Access zu diesem WLAN, und lässt sich nicht auf die Bildung von Sub-Netzwerken, insbesondere geschützte Punkt-zu Punkt Verbindungen innerhalb einer bereits aufgebauten, offenen Netzwerkstruktur, wie z.B. IP-basierte Telefonie und/oder Bildtelefonie (z.B. mittels des Session Initiation Protocol SIP) verwenden. WO 2004/017565 A1, ebenfalls aus dem Stande der Technik, zeigt ein Verfahren zur Leistungserfassung und -verrechnung bei Roaming eines mobilen IP-Nodes in heterogenen WLANs basierend auf dem Verfahren von WO 2004/017564 A1. Zur Verrechnung werden erste Call Detail Records von einem Access Server auf ein Billing-Modul und zweite Call Detail Records vom Access Server auf ein Proxy-Modul übertragen. Mittels eines Clearings-Moduls wird die beanspruchte Leistung bei einem Anbieter eines Festnetzes verrechnet und/oder die TAP-Files zur Verrechnung an einen GSM Dienstanbieter übermittelt. Auch das in WO 2004/017565 A1 gezeigte Verfahren richtet sich auf die Authentifizierung, Registrierung und Verrechnung beim Access zu einem WLAN durch einen Access Server, und lässt sich durch die Access Server spezifischen Charakteristiken nicht auf die Bildung von Sub-Netzwerken in bestehenden, offenen Netzwerkverbindungen anwenden, insbesondere geschützten Punkt-zu Punkt Verbindungen innerhalb einer normalen LAN/WLAN Netzwerkstruktur, wie z.B. IP-basierte Telefonie und/oder Bildtelefonie (z.B. mittels des Session Initiation Protocol SIP), wobei die IP-Nodes jeweils bereits Zugang zum Netzwerk haben.

Die IP-basierte Telefonie beziehungsweise Bildtelefonie im Stand der Technik sind aber mit erheblichen Nachteilen verbunden. Zwar ist es heute möglich, die Gesprächsteilnehmer in einem IP-basierten Netzwerk mittels beschriebenen Authentifizierungs- und Autorisierungsmechanismen zu authentifizieren und ihre Autorisierung für bestimmte Dientste zu überprüfen. Jedoch sind diese Authentifizierungs- und Autorisierungsmethoden ziemlich umständlich und entsprechen zudem nicht den hohen Standards bezüglich Sicherheit, Billing und Dienstautorisierung, wie sie in den herkömmlichen Telefonienetzwerken gegeben sind. Insbesondere bieten GSM / UMTS-Mobilfunknetzwerke bezüglich Authentifizierung und Autorisierung Standards, welche in einem IP-basierten Netzwerk aufgrund seiner intrinsischen Eigenschaften nicht implementiert werden können. Der offenen Architektur des IP-Protokolls fehlen nämlich viele Informationen, welche zur vollen Kompatibilität mit den GSM-Netzwerken unbedingt benötigt werden.

Es ist daher eine Aufgabe der Erfindung, ein neues und besseres Verfahren sowie ein System zur IP-basierten Telefonie und/oder Bildtelefonie vorzuschlagen. Insbesondere sollen dieses neue und bessere Verfahren sowie System ermöglichen, den Benutzern von IP-basierter Telefonie und/oder Bildtelefonie die gleichen Standards bezüglich Registration bzw. Authentifikation und Autorisation zur Verfügung zu stellen, wie sie es von der herkömmlichen Telefonie, wie z.B. von der GSM-Mobilfunktelefonie gewohnt sind.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zwischen mindestens einem IP-Node und einem zweiten Endgerät, wobei IP-Node im IP-basierten Netzwerk authentifiziert und in einer Lokationsdatenbank registriert wird Authentifizierungsdaten von einem Identifikationsmodul des IP-Nodes sowie Registrationsdaten vom IP-Node an ein Registrierungsmodul übertragen werden, wobei mittels des Registrierungsmoduls die Authentifizierungsdaten von den Registrationsdaten getrennt und an ein Authentifizierungsmodul geleitet werden, wobei mittels des Authentifizierungsmoduls sowie mittels eines Home Location Registry basierend auf den Authentifizierungsdaten Authentifizierung des IP-Nodes durchgeführt wird, wobei bei erfolgreicher Authentifizierung des IP-Nodes ein Location Update beim Home Location Registry durchgeführt wird und entsprechende Lokalisierungsdaten an das Registrierungsmodul übertragen werden, und wobei mittels des Registrierungsmoduls die Lokalisierungsdaten des IP-Nodes in der Lokationsdatenbank gespeichert werden sowie entsprechende Daten an das Identifikationsmodul des IP-Nodes geleitet werden, wobei der IP-Node für IP-basierte Telefonie und Videokonferencing freigegeben wird. Dies hat unter anderem den Vorteil, dass sichere und bequeme Authentifizierung und/oder Autorisierung der Benutzer in einem IP-basierten Telefonie- und/oder Bildtelefonie-Netzwerk möglich werden. Durch das Verbinden der IP-basierten Telefonie und/oder Bildtelefonie, mit der bequemen und sicheren Verfahren wird eine hoch abgesicherte und bewährte Authentifizierung und/oder Autorisierung der Benutzer möglich, wie es von der GSM-Mobilfunktelefonie bekannt ist.

In einer Ausführungsvariante werden Authentifizierungsdaten eingesetzt, welche den GSM-Standard erfüllen. Diese Ausführungsvariante hat unter anderem den Vorteil, dass eine bestehende GSM-Infrastruktur eines Anbieters ohne grössere Modifikationen verwendet werden kann. Dabei werden für die Benutzer der IP-basierten Telefonie und/oder Bildtelefonie Benutzerprofile kreiert, wie für die Benutzer der gewöhnlichen Mobilfunktelefonie. Zudem können auf diese Art und Weise bestehende hohe Sicherheitskriterien der GSM-Technologie ausgenutzt werden.

In einer weiteren Ausführungsvariante wird als Identifikationsmodul des IP-Nodes eine SIM-Karte verwendet. Dies hat unter anderem den Vorteil, dass SIM-Karte ein weitverbreitetes und bewährtes Mittel zur Identifikation von IP-Nodes, insbesondere mobilen IP-Nodes ist. Es entspricht ebenfalls den hohen Sicherheitstandards und kann dank ihrer kleinen Grösse auch leicht ausgetauscht oder transportiert werden. Dazu sind die Herstellungskosten solcher SIM-Karten gering im Vergleich zu anderen ähnlichen Identifikationsmechanismen.

In einer wieder weiterer Ausführungsvariante entspricht die eingesetzte Infrastruktur für die IP-basierte Telefonie und/oder Bildtelefonie dem SIP-Protokoll. Diese Ausführungsvariante hat unter anderem den Vorteil, dass SIP-Protokoll in den IP-basierten Telefonie und/oder Bildtelefonie-Netzwerken eine vielverwendete Alternative ist. SIP ist leicht zu implementieren, angelehnt an das HTTP-Protokoll und erlaubt eine hohe Flexibilität für verschiedenste Anwendungen. Ebenfalls werden heute bereits viele Produkte auf dem Markt angeboten, welche SIP-Protokoll unterstützen.

In einer weiterer Ausführungsvariante werden die Authentifizierungsdaten vom IP-Node an das Registriationsmodul über eine kontaktlose Schnittstelle übertragen. Diese Ausführungsvariante hat unter anderem den Vorteil, dass mobile IP-Nodes eingesetzt werden können, welche eine grössere Mobilität der Benutzer der IP-basierten Telefonie und/oder Mobiltelefonie ermöglicht, vergleichbar mit der Mobilfunktelefonie.

In einer weiteren Ausführungsvariante werden die Authentifizierungsdaten vom IP-Node an das Registrationsmodul über eine WLAN 802.11- und/oder Bluetooth- und/oder GSM- und/oder UMTS-Schnittstelle übertragen werden. Dies hat den Vorteil, dass bekannte und etablierte Netzwerke zur Übertragung von Authentifizierungsdaten verwendet werden können, so dass bestehende Einrichtungen (Hotspots) verwendet werden können.

In einer wieder weiteren Ausführungsvariante wird als IP-Node ein IP-fähiges Mobilfunktelefon eingesetzt. Diese Ausführungsvariante hat den Vor teil, dass die IP-basierte Telefonie und/oder Bildtelefonie zusätzlich oder als Ersatz zur herkömmlichen Mobilfunktelefonie verwendet werden kann, ohne dass der Benutzer dabei ein anderes Gerät anschaffen muss.

In einer weiteren Ausführungsvariante werden Call Detail Records des IP-Nodes an das Registrierungsmodul übermittelt, wobei dann mindestens die Indentität des IP-Nodes und/oder Zeitdauer und/oder Anbieter der beanspruchten Leistung erfasst und an ein Billing-Modul weitergegeben werden, und das Billing-Modul entsprechend der beanspruchten Leistung basierend auf den Billing-Daten des Registrierungsmoduls und den ersten Call Detail Records Billing-Files erzeugt und diese mit Fakturierungsanweisungen an ein Clearing-Modul übermittelt werden. Dies hat unter anderem den Vorteil, dass die Verrechnung der beanspruchten Leistungen einfach über ein Clearing-Modul abgewickelt werden kann, insbesondere im Falle des Clearing zwischen den verschiedenen Netzwerkbetreibem.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen wer den durch folgende beigelegten Figuren illustriert:

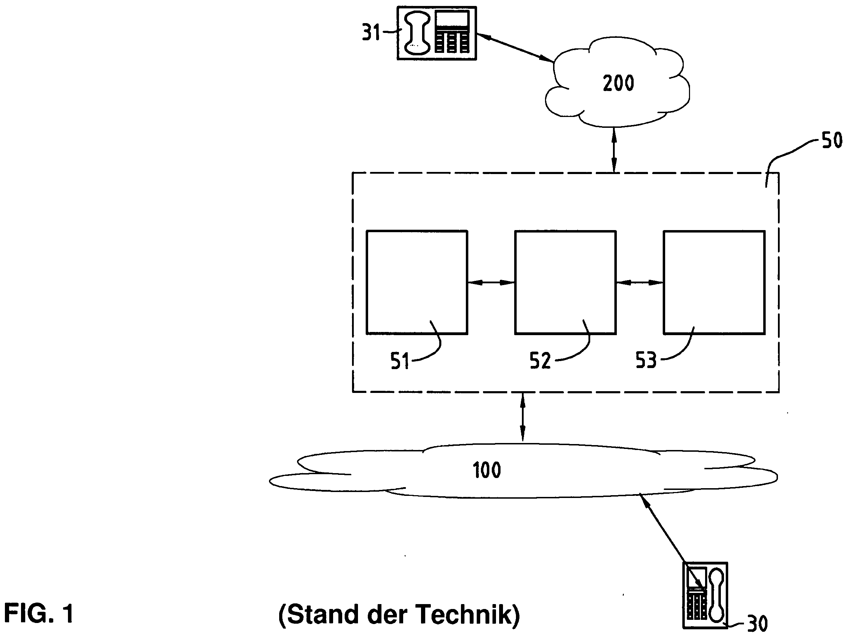

Figur 1 zeigt ein Blockdiagramm, welches schematisch ein Verfahren und ein System für IP-basierte Telefonie und/oder Bildtelefonie des Standes der Technik illustriert. Dabei greifen die IP-Nodes 30 über ein Datennetzwerk 100 auf die Infrastruktrur für IP-basierte Telefonie und/oder Bildtelefonie 50 zu. Diese Infrastruktur für IP-basierte Telefonie und/oder Bildtelefonie 50 umfasst ein Registrierungsmodul 51, ein Kontrollmodul 52 und ein Gateway IP/PSTN 53, mittels welches Kommunikation zu den über das öffentliche geschaltete Telefonienetzwerk 200 geschalteten Telefonen 31 aufgebaut wird.

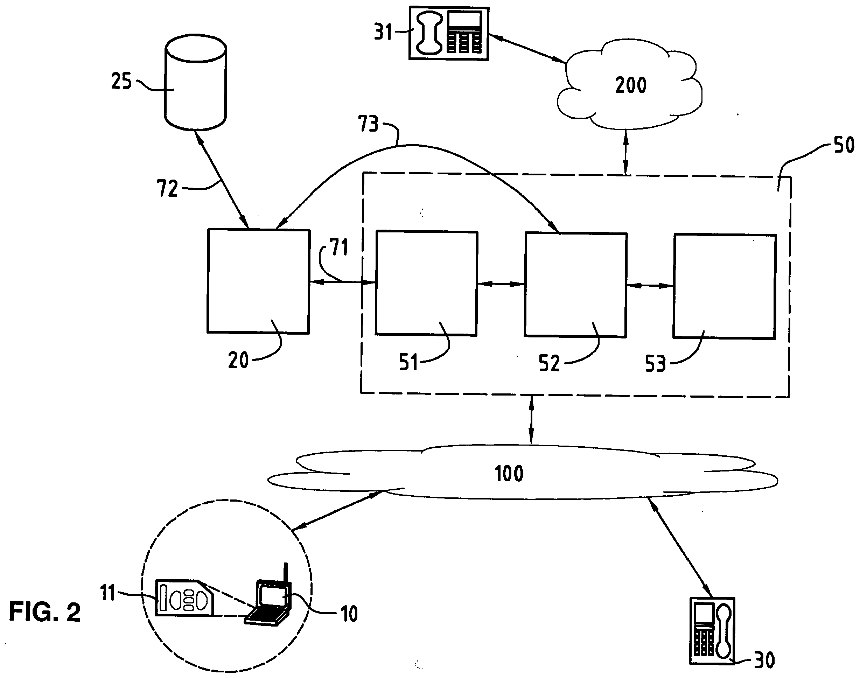

Figur 2 zeigt ein Blockdiagramm, welches schematisch ein erfindungsgemässes Verfahren und ein erfindungsgemässes System für IP-basierte Telefonie und/oder Bildtelefonie illustriert, wobei IP-Nodes 10 ein Identifikationsmodul 11 umfassen und über ein Datennetzwerk 100 auf eine Infrastruktur für die IP-basierte Telefonie und/oder Bildtelefonie 50 zugreifen. Diese Infrastruktur für IP-basierte Telefonie und/oder Bildtelefonie 50 umfasst ein Registrierungsmodul 51, ein Kontrollmodul 52 und ein Gateway IP/PSTN 53, mittels welches Kommunikation zu den über das öffentliche geschaltete Telefonienetzwerk 200 geschalteten Telefonen 31 aufgebaut wird. Ein Authentifizierungsmodul 20 authentifiziert den IP-Node 10 basierend auf den auf dem Identifikationsmodul 11 des IP-Nodes 10 gespeicherten Authentifizierungsdaten bei einem Home Location Registry 25.

Figur 2 illustriert eine Architektur, die zur Realisierung der Erfindung verwendet werden kann. In der Figur 2 bezieht sich das Bezugszeichen 10 auf einen IP-Node, welcher über die notwendige Infrastruktur, einschliesslich aller Hardware- und Softwarekomponenten vefügt, um ein beschriebenes erfindungsgemässes Verfahren und/oder System zu realisieren. Unter IP-Nodes 10 sind unter anderem alle möglichen sogenannten Customer Premise Equipment (CPE) zu verstehen, die zur Benutzung an verschiedenen Netzwerkstandorten und/oder mit verschiedenen Netzwerken vorgesehen sind. Diese umfassen beispielsweise IP-basierte Telefone und/oder Videofone, sowie sämtliche andere IP-fähigen Geräte wie zum Beispiel PDAs, Laptops oder Mobilfunktelefone. Die IP-Nodes 10 besitzen eine oder mehrere verschiedene physikalische Netzwerkschnittstellen, die auch mehrere verschiedene Netzwerkstandards unterstützen können. Diese physikalischen Netzwerkschnittstellen des IP-Nodes 10 können beispielsweise kontaktlose Schnittstellen zu WLAN (Wireless Local Area Network), Bluetooth, GSM (Global System for Mobile Communication), GPRS (Generalised Packet Radio Service), USSD (Unstructured Supplementary Services Data), EDGE (Enhanced Data Rates for GSM Evolution) oder UMTS (Universal Mobile Telecommunications System) usw. umfassen. Dies können aber auch physikalische Netzwerkschnittstellen zu Ethemet, Token Ring oder einem anderen Wired LAN (Local Area Network) sein. Das Bezugszeichen 100 stellt entsprechend die verschiedenen Netzwerke dar, beispielsweise ein Wireless LAN (basierend auf IEEE 802.1x), ein Bluetooth-Netzwerk, ein Wired LAN (Ethernet oder Token Ring), aber auch ein Mobilfunknetzwerk (GSM, UMTS, etc.) oder ein PSTN-Netzwerk. Die physischen Netzwerkschnittstellen des IP-Nodes 10 können nicht nur packet-switched Schnittstellen, wie sie von Netzwerkprotokollen direkt benutzt werden, sondern auch circuit-switched Schnittstellen, die mittels Protokollen wie zum Beispiel PPP (Point to Point Protocol), SLIP (Serial Line Internet Protocol) oder GPRS (Generalised Packet Radio Service) für den Datentransfer benutzt werden können.

Des Weiteren umfasst der IP-Node 10 ein Identifikationsmodul 11. Dieses Identifikationsmodul 11 kann hardwaremässig oder softwaremässig implementiert sein und über eine kontaktbehaftete oder kontaktlose Schnittstelle mit dem IP-Node 10 verbunden, bzw. in den IP-Node 10 integriert sein. Insbesondere kann das Identifikationsmodul 11 als eine SIM-Karte realisiert sein, wie man sie von den Mobilfunktelefonen kennt. Dieses Identifikationsmodul 11 beinhaltet unter anderem die für die Authentifizierung des IP-Nodes 10 in einem IP-basierten Netzwerk für Telefonie und/oder Bildtelefonie relevanten Authentifizierungsdaten. Diese Authentifizierungsdaten können insbesondere eine IMSI (International Mobile Subscriber Identifier) und/oder TMSI (Temporary Mobile Subscriber Identifier) und/oder LAI (Location Area Identity) usw. umfassen, welche dem GSM-Standard entsprechen.

Zur Registrierung des IP-Nodes 10 im Netzwerk für IP-basierte Telefonie und/oder Bildtelefonie fordert der IP-Node 10 über eine kontaktbehaftete oder kontaktlose Schnittstelle zum IP-basierten Netzwerk 100 den Zugang zum Telefonie- und/oder Bildtelefonie-Dienst. Wie bereits beschrieben, kann das IP-basierte Netzwerk 100 verschiedene Netzwerkstandards und -protokolle umfassen, wie z.B. drahtlose Netzwerke WLAN 802.11 oder Bluetooth oder aber verkabelte Netzwerke Ethernet oder Token Ring etc. Die Infrastruktur für die IP-basierte Telefonie und/oder Bildtelefonie 50 umfasst ein Registrationsmodul 51, ein Kontrollmodul 52 und ein Gateway 53, welcher die Verbindung zwischen dem IP-basierten Netzwerk 100 und dem öffentlichen geschalteten Telefonienetzwerk (PSTN) 200 und/oder Mobilfunknetzwerk gewährleistet. Diese Infrastruktur kann nach den Forderungen des SIP- (Session Initiation Protocol) und/oder H.323- und/oder MGCP- (Media Gateway Control Protocol) und/oder MEGACO-Protokolls (Media Gateway Control) für die IP-basierte Telefonie und/oder Bildtelefonie gebaut sein. Eine Registrationsaufforderung beinhaltet die Authentifizierungsdaten vom Identifikationsmodul 11 des IP-Nodes 10 und Registrierungsdaten zur Registration im IP-basierten Telefonie- und/oder Bildtelefonie-Netzwerk. Die Authentifizierungsdaten können insbesondere die IMSI von einer GSM-basierten SIM-Karte beinhalten. Diese Registrationsaufforderung wird an das Registrationsmodul 51 des IP-basierten Telefonie- und/oder Bildtelefonie-Netzwerks übermittelt, beispielsweise an einen SIP-Register. Die Authentifizierungsdaten werden vom Registrationsmodul 51 von den Registrierungsdaten getrennt und an ein Authentifizierungsmodul 20 übermittelt. Basierend auf den Authentifizierungsdaten werden mittels des Authentifizierungsmoduls 20 die notwendigen Authentifikation und/oder Autorisation und/oder Konfigurationsfunktionen generiert, so dass das Authentifikationsmodul 20 die Authentifizierung und/oder Autorisation des IP-Nodes 10 basierend auf den Authentifizierungsdaten vom Identifikationsmodul 11 des IP-Nodes 10 bei einem Home Location Registry (HLR) 25 durchführt. Dieser Home Location Registry 25 kann insbesondere ein Home Location Registry (HLR) eines GSM-Netzwerks sein, welcher entsprechende Benutzerprofile beinhaltet. Es ist auch vorstellbar, dass für die Authentifizierung des IP-Nodes 10 bloss bei einem oder mehreren der Schritte in der Authentifikation die IMSI vom Identifikationsmodul 11 des IP-Nodes 10 verwendet wird, während bei allen weiteren Authentifikationsschritten die IMSI durch eine generierte temporäre IMSI (genannt TMSI) ersetzt wird.

Für das Authentifizierungsverfahren kann insbesondere folgendes Challenge-Response Verfahren verwendet werden. Als Challenge (Frage) erhält das Identifikationsmodul 11 (z.B. die SIM-Karte) eine 128-bit Zufallszahl (RAND) gegeben. Anschliessend wird auf dem Identifikationsmodul 11 ein für den jeweiligen Operator spezifischer, vertraulicher Algorithmus ausgeführt, der als Input die Zufallszahl RAND und einen geheimen, auf dem Identifikationsmodul 11 gespeicherten Schlüssel Ki erhält und daraus eine 32-bit Antwort (SRES) und ein 64-bit Schlüssel Kc generiert. Kc dient zur Verschlüsselung des Datentransfers über drahtlose Schnittstellen (GSM Technical Specification GSM 03.20 (ETS 300 534): "Digital cellular telecommunication system (Phase 2); Security related network functions", European Telecommunications Standards Institute, August 1997). Zur Authentifizierung werden mehrere RAND Challenge zum Generieren von mehreren 64-bit Kc Schlüsseln verwendet. Diese Kc-Schlüssel werden zu einem längeren Session Key kombiniert. Zu Beginn der Authentifizierung überträgt der IP-Node 10 die International Mobile Subscriber Identity (IMSI) des Benutzer vom Identifikationsmodul 11 ans Registrationsmodul 51. Mit der IMSI erhält das Registrationsmodul 51 auf eine Triplet-Anfrage vom entsprechenden HLR 25 n GSM-Triplets. Aus den Triplets berechnet das Registrationsmodul 51 MAC_RAND und den Session Key K. Die Berechnung der kryptographischen Werte des SIM-generierten Session Key K und der Message Authentification Codes MAC-RAND und MAC_SRES könne beispielsweise dem Dokument "HMAC: Keyed-Hashing for Message Authentification" von H. Krawczyk, M. Bellar und R. Canetti (RFC2104, Feb. 1997) entnommen werden. Danach läuft der GSM-Authentifikationsalgorithmus auf dem Identifikationsmodul 11 des IP-Nodes 10 und berechnet eine Kopie von MAC-RAND. Der IP-Node 10 kontrolliert, dass der berechnete Wert von MAC_RAND gleich dem erhaltenen Wert von MAC_RAND ist. Ergibt sich keine Übereinstimmung der beiden Werte, bricht der IP-Node 10 das Authentifikationsverfahren ab und schickt keine vom Identifikationsmodul 11 berechneten Authentifikationswerte an das Netzwerk. Da der Wert RAND zusammen mit dem Message Authentifikations-Code MAC_RAND erhalten wird, kann der IP-Node 10 sicherstellen, dass RAND neu ist und vom Netzwerk generiert wurde. Bei erfolgreicher Authentifizierung wird ein Location Update beim HLR 25 durchgeführt und der IP-Node 10 erhält in einer Customer Database des Access Servers einen entsprechenden Eintrag.

Nach der erfolgten Authentifizierung und/oder Autorisierung beim Home Location Registry 25 werden die entsprechenden Lokalisierungsdaten vom Authentifizierungsmodul 20 an das Registrationsmodul 51 übermittelt. Mittels des Registrationsmoduls 51 werden die Lokalisierungsdaten in einer Datenbank mit Informationen über die IP-Nodes 10 in dem IP-basierten Telefonie- und/oder Bildtelefonie-Netzwerk gespeichert. Insbesondere können diese Lokalisierungsdaten IP-Adresse, MAGAdresse und weitere relevante Daten für die IP-basierte Telefonie und/oder Bildtelefonie beinhalten. Zusätzlich zur Authentifizierung im IP-basierten Telefonie- und/oder Bildtelefonie-Netzwerk werden die Call Detail Records des IP-Nodes 10 an das Registrierungsmodul 51 übermittelt, wobei das Registrierungsmodul 51 mindestens die Indentität des IP-Nodes 10 und/oder Zeitdauer und/oder Anbieter der beanspruchten Leistung erfasst und an ein Billing-Modul wietergibt, und wobei das Billing-Modul entsprechend der beanspruchten Leistung basierend auf den Billing-Daten des Registrierungsmoduls 51 und den ersten Call Detail Records Billing-Files erzeugt und diese mit Fakturierungsanweisungen an ein Clearing-Modul übermittelt. Anschliessend werden vom Registrationsmodul 51 entsprechende Authentifizierungsdaten an das Identifikationsmodul 51 des IP-Nodes 10 übertragen und gespeichert, womit der IP-Node 10 für die IP-basierte Telefonie und/oder Bildtelefonie freigegeben wird.

## Patentansprüche

1. Verfahren für die Registrierung eines IP-Endgerätes in einem SIP-Registrar (51) zur anschliessenden Nutzung von IP-basierter Telefonie und/oder Bildtelefonie zwischen einem ersten Endgerät in Form eines IP-Nodes (10) und einem zweiten Endgerät (30/31), wobei mittels eines SIP-Registrars (51) basierend auf übertragenen Registrierungsdaten der IP-Node (10) im IP-basierten Telefonie und/oder Bildtelefonienetzwerk authentifiziert und in einer Lokationsdatenbank registriert wird, **dadurch gekennzeichnet,**
**dass** der IP-Node (10) mittels einer Registrationsanforderung Zugang zum IP-basierten Telefonie und/oder Bildtelefonie-Dienst fordert, wobei die Registrationsanforderung eine IMSI einer SIM-Karte (11) des IP-Nodes (10) und die Registrierungsdaten zur Registration des IP-Nodes (10) im IP-basierten Telefonie- und/oder Bildtelefonie-Netzwerk einer SIP-Infrastruktur umfasst, wobei die Registrierungsdaten Lokalisierungsdaten in Form einer IP-Adresse des IP-Nodes (10) beinhalten, und die Registrationsanforderung an den SIP-Registrar (51) übertragen wird, und wobei der SIP-Registrar (51) die Lokationsdatenbank mit Informationen über angemeldete Endgeräte führt und SIP-Anfragen mittels dieser Datenbank an diese Endgeräte umlenkt,
**dass** vor der Registrierung beim SIP-Registrar (51) eine Authentifizierung stattfindet, wobei der SIP-Registrar (51) die IMSI von der SIM-Karte (11) erhält, ein GSM-Triplet bei einem entsprechenden Home Location Registry, HLR, (25) anfragt, und Authentifikationswerte aus dem GSM-Triplet berechnet und an die SIM-Karte übermittelt,
**dass** nach erfolgreicher Authentifizierung mittels der Authentifikationswerte und dem GSM-Authentifikationsalgorithmus auf der SIM-Karte ein Location Update bei dem HLR (25) durchgeführt wird,
**dass** mittels des SIP-Registrars (51) die Lokalisierungsdaten des IP-Nodes (10) in der Lokationsdatenbank gespeichert werden, wobei der IP-Node (10) für IP-basierte Telefonie und Bildtelefonie-Dienste freigegeben wird, und
**dass**, während eines Telefonats des IP-Nodes (10), der SIP-Registrar (51) Billing-Daten, welche die Identität des IP-Nodes und die Zeitdauer des Telefonats angeben, erfasst, und zusammen mit Call Detail Records an ein Billing-Modul übermittelt werden, wobei das Billing-Modul entsprechend der Billing-Daten des Registrierungsmoduls (51) und den Call Detail Records Billing-Files erzeugt und diese mit Fakturierungsanweisungen an ein Clearing-Modul übermittelt.

2. Verfahren nach Anspruch 1, **dadurch gekennzeichnet, dass** die Authentifizerungsdaten den GSM-Standard erfüllen.

3. Verfahren nach einem der Ansprüche 1 oder 2, **dadurch gekennzeichnet, dass** die Authentifizierungsdaten sowie die Registrierungsdaten vom IP-Node (10) an den SIP-Registrar (51) über eine kontaktlose Schnittstelle übertragen werden.

4. Verfahren nach einem der Ansprüche 1 bis 3, **dadurch gekennzeichnet, dass** der IP-Node (10) ein IP-fähiges Mobilfunktelefon ist.

5. System für die Registrierung eines IP-Endgerätes in einem SIP-Registrar zur anschliessenden Nutzung von IP-basierter Telefonie und/oder Bildtelefonie zwischen einem ersten Endgerät in Form eines IP-Nodes (10), welches im IP-basierten Netzwerk authentifizierbar und in einer Lokationsdatenbank registrierbar ist, und einem zweiten Endgerät (30/31), wobei das System ein SIP-Registrar (51) zur Registrierung des IP-Nodes (10) im IP-basierten Telefonie und/oder Bildtelefonienetzwerk in einer Lokationsdatenbank umfasst und wobei die Registrierung mittels übertragenen Registrierungsdaten erfolgt, **dadurch gekennzeichnet,**
**dass** der IP-Node (10) Mittel zum Generieren einer Registrationsanforderung für den Zugang zum IP-basierten Telefonie und/oder Bildtelefonie-Dienst umfasst, wobei die Registrationsanforderung eine IMSI einer SIM-Karte (11) des IP-Nodes (10) und die Registrierungsdaten zur Registration im IP-basierten Telefonie- und/oder Bildtelefonie-Netzwerk einer SIP-Infrastruktur umfasst, wobei die Registrierungsdaten Lokalisierungsdaten in Form einer IP-Adresse des IP-Nodes (10) beinhalten, wobei die Registrationsanforderung an den SIP-Registrar (51) übertragbar ist, und wobei mittels des SIP-Registrar (51) die Lokationsdatenbank mit Informationen über angemeldete Endgeräte führbar ist und SIP-Anfragen mittels dieser Datenbank an diese Endgeräte umlenkbar sind,
**dass** für eine Authentifizierung vor der Registrierung beim SIP-Registrar, der SIP-Registrar (51) Mittel zum Erhalten der IMSI von der SIM-Karte (11), und Mittel zum Anfragen eines GSM-Triplet bei einem entsprechenden Home Location Registry, HLR, (25) umfasst, wobei Authentifikationswerte aus dem GSM-Triplet berechenbar und an die SIM-Karte übermittelbar sind,
**dass** das System ein das Authentifizierungsmodul (25) mit Mittel zum Durchführen von einem Location Update bei dem HLR (25) nach erfolgreicher Authentifizierung mittels der Authentifikationswerte und dem GSM-Authentifikationsalgorithmus auf der SIM-Karte (11) umfasst,
**dass** der SIP-Registrar (51) Mittel zum Speichern von den Lokalisierungsdaten des IP-Nodes (10) in der Lokationsdatenbank umfasst, wobei der IP-Node (10) für IP-basierte Telefonie und Bildtelefonie-Dienste freigebbar ist, und
**dass**, während eines Telefonats des IP-Nodes (10), für den SIP-Registrar (51) Billing-Daten, welche die Identität des IP-Nodes und die Zeitdauer des Telefonats angeben, erfassbar sind, und zusammen mit Call Detail Records an ein Billig-Modul übermittelbar sind, wobei mittels des Billing-Modul entsprechend der Billing-Daten des Registrierungsmoduls (51) und den Call Detail Records Billing-Files erzeugbar sind und diese mit Fakturierungsanweisungen an ein Clearing-Modul übermittelbar sind.

6. System nach Anspruch 5, **dadurch gekennzeichnet, dass** die Authentifizerungsdaten den GSM-Standard erfüllen.

7. System nach einem der Ansprüche 5 oder 6, **dadurch gekennzeichnet, dass** der SIP-Registrar (51) ein SIP-Register ist.

8. System nach einem der Ansprüche 5 bis 7, **dadurch gekennzeichnet, dass** die Übertragung von den Authentifizierungsdaten sowie von den Registrierungsdaten vom IP-Node (10) an den SIP-Registrar (51) über eine kontaktlose Schnittstelle erfolgt.

9. System nach einem der Ansprüche 5 bis 8, **dadurch gekennzeichnet, dass** der IP-Node (10) ein IP-fähiges Mobilfunktelefon ist.

## Claims

1. A method for registering an IP terminal in a SIP registrar (51) for subsequent use of IP-based telephony and/or video telephony between a first terminal in the form of an IP node (10) and a second terminal (30/31), wherein the IP node (10) in the IP-based telephony and/or video telephony network is authenticated, based on transmitted registration data, by means of a SIP registrar (51) and registered in a location database, **characterized in that**
the IP node (10) requests, via a registration request, access to the IP-based telephony and/or video telephony service, wherein the registration request includes an IMSI of a SIM card (11) of the IP node (10), and the registration data for registering the IP node (10) in the IP-based telephony and/or video telephony network of a SIP infrastructure, wherein the registration data contain localization data in the form of an IP address of the IP node (10), and the registration request is transmitted to the SIP registrar (51), and wherein the SIP registrar (51) provides the location database with information concerning logged-on terminals, and forwards SIP requests to these terminals by use of this database,
an authentication takes place prior to the registration with the SIP registrar (51), wherein the SIP registrar (51) obtains the IMSI from the SIM card (11), queries a GSM triplet for a corresponding Home Location Registry (HLR) (25), and computes authentication values from the GSM triplet and transmits them to the SIM card,
after successful authentication using the authentication values and the GSM authentication algorithm, a location update for the HLR (25) is carried out on the SIM card,
the localization data of the IP node (10) are stored in the location database by means of the SIP registrar (51), wherein the IP node (10) is enabled for IP-based telephony and video telephony services, and
during a telephone call of the IP node (10), the SIP registrar (51) collects billing data that indicate the identity of the IP node and the duration of the telephone call, and together with call detail records transmits same to a billing module, wherein the billing module generates billing files corresponding to the billing data of the registration module (51) and the call detail records, and transmits them together with billing instructions to a clearing module.

2. The method according to Claim 1, **characterized in that** the authentication data meet the GSM standard.

3. The method according to one of Claims 1 or 2, **characterized in that** the authentication data and the registration data are transmitted from the IP node (10) to the SIP registrar (51) via a contactless interface.

4. The method according to one of Claims 1 to 3, **characterized in that** the IP node (10) is an IP-capable mobile telephone.

5. A system for registering an IP terminal in a SIP registrar for subsequent use of IP-based telephony and/or video telephony between a first terminal in the form of an IP node (10), which may be authenticated in the IP-based network and registered in a location database, and a second terminal (30/31), wherein the system includes a SIP registrar (51) for registering the IP node (10) in the IP-based telephony and/or video telephony network in a location database, and wherein the registration takes place using transmitted registration data, **characterized in that**
the IP node (10) includes means for generating a registration request for access to the IP-based telephony and/or video telephony service, wherein the registration request includes an IMSI of a SIM card (11) of the IP node (10) and the registration data for registration in the IP-based telephony and/or video telephony network of a SIP infrastructure, wherein the registration data contain localization data in the form of an IP address of the IP node (10), wherein the registration request is transmittable to the SIP registrar (51), and wherein the location database may be provided with information concerning logged-on terminals by use of the SIP registrar (51), and SIP requests may be forwarded to these terminals, using this database,
for an authentication prior to the registration with the SIP registrar, the SIP registrar (51) includes means for obtaining the IMSI from the SIM card (11), and means for querying a GSM triplet for a corresponding Home Location Registry (HLR) (25), wherein authentication values are computable from the GSM triplet and transmittable to the SIM card,
the system includes an authentication module (25) with means for carrying out a location update for the HLR (25) after successful authentication, using the authentication values and the GSM authentication algorithm on the SIM card (11),
the SIP registrar (51) includes means for storing the localization data of the IP node (10) in the location database, wherein the IP node (10) may be enabled for IP-based telephony and video telephony services, and
during a telephone call of the IP node (10), billing data that indicate the identity of the IP node and the duration of the telephone call are collectable for the SIP registrar (51), and together with call detail records are transmittable to a billing module, wherein billing files corresponding to the billing data of the registration module (51) and the call detail records are generatable by means of the billing module, and together with billing instructions are transmittable to a clearing module.

6. The system according to Claim 5, **characterized in that** the authentication data meet the GSM standard.

7. The system according to one of Claims 5 or 6, **characterized in that** the SIP registrar (51) is a SIP register.

8. The system according to one of Claims 5 to 7, **characterized in that** the transmission of the authentication data and the registration data takes place from the IP node (10) to the SIP registrar (51) via a contactless interface.

9. The system according to one of Claims 5 to 8, **characterized in that** the IP node (10) is an IP-capable mobile telephone.

## Revendications

1. Procédé d'enregistrement d'un terminal IP dans un registraire SIP (51) pour une exploitation ultérieure de la téléphonie et/ou visiophonie sur IP entre un premier terminal sous la forme d'un noeud IP (10) et un deuxième terminal (30/31), dans lequel, au moyen d'un registraire SIP (51) basé sur des données d'enregistrement transmises, le noeud IP (10) est authentifié dans le réseau de téléphonie et/ou de visiophonie sur IP et enregistré dans une base de données de localisation,
**caractérisé en ce que**
le noeud IP (10) demande au moyen d'une requête d'enregistrement l'accès au service de téléphonie et/ou de visiophonie sur IP, dans lequel la requête d'enregistrement comprend une IMSI d'une carte SIM (11) du noeud IP (10) et les données d'enregistrement pour enregistrer le noeud IP (10) dans le réseau de téléphonie et/ou de visiophonie sur IP d'une infrastructure SIP, dans lequel les données d'enregistrement contiennent des données de localisation sous la forme d'une adresse IP du noeud IP (10), et la requête d'enregistrement est transmise au registraire SIP (51), et dans lequel le registraire SIP (51) gère la base de données de localisation avec des informations concernant des terminaux connectés et redirige des requêtes SIP vers lesdits terminaux au moyen de ladite base de données,
avant l'enregistrement dans le registraire SIP (51), une authentification a lieu, dans lequel le registraire SIP (51) reçoit l'IMSI de la carte SIM (11), demande un triplet GSM à un registre de localisation nominal, HLR, (25), correspondant et calcule des valeurs d'authentification à partir du triplet GSM et les transmet à la carte SIM,
après une authentification réussie, une mise à jour de localisation est effectuée dans le HLR (25) au moyen des valeurs d'authentification et de l'algorithme d'authentification GSM,
au moyen du registraire SIP (51), les données de localisation du noeud IP (10) sont sauvegardées dans la base de données de localisation, ledit noeud IP (10) étant validé pour des services de téléphonie et de visiophonie sur IP, et
pendant un appel du noeud IP (10), le registraire SIP (51) détecte des données de facturation indiquant l'identité du noeud IP et la durée de l'appel et les transmet avec des enregistrements des détails de l'appel à un module de facturation, dans lequel ledit module de facturation crée des fichiers de facturation selon les données de facturation du module d'enregistrement (51) et les enregistrements des détails de l'appel et les transmet à un module de compensation avec des instructions de facturation.

2. Procédé selon la revendication 1, **caractérisé en ce que** les données d'authentification répondent à la norme GSM.

3. Procédé selon l'une quelconque des revendications 1 ou 2, **caractérisé en ce que** les données d'authentification ainsi que les données d'enregistrement sont transmises du noeud IP (10) au registraire SIP (51) par une interface sans contact.

4. Procédé selon l'une quelconque des revendications 1 à 3, **caractérisé en ce que** le noeud IP (10) est un téléphone mobile compatible IP.

5. Système d'enregistrement d'un terminal IP dans un registraire SIP pour une exploitation ultérieure de la téléphonie et/ou visiophonie sur IP entre un premier terminal sous la forme d'un noeud IP (10), pouvant être authentifié dans le réseau sur IP et enregistré dans une base de données de localisation, et un deuxième terminal (30/31), dans lequel le système comprend un registraire SIP (51) pour enregistrer le noeud IP (10) dans le réseau de téléphonie et/ou de visiophonie sur IP dans une base de données de localisation, et dans lequel l'enregistrement s'effectue au moyen de données d'enregistrement transmises,
**caractérisé en ce que**
le noeud IP (10) comprend des moyens pour générer une requête d'enregistrement pour l'accès au service de téléphonie et/ou de visiophonie sur IP, dans lequel la requête d'enregistrement comprend une IMSI d'une carte SIM (11) du noeud IP (10) et les données d'enregistrement pour l'enregistrement dans le réseau de téléphonie et/ou de visiophonie sur IP d'une infrastructure SIP, dans lequel les données d'enregistrement contiennent des données de localisation sous la forme d'une adresse IP du noeud IP (10), la requête d'enregistrement étant transmissible au registraire SIP (51), et dans lequel le registraire SIP (51) permet de gérer la base de données de localisation avec des informations concernant des terminaux connectés et de rediriger des requêtes SIP au moyen de ladite base de données vers lesdits terminaux,
pour une authentification avant l'enregistrement dans le registraire SIP, le registraire SIP (51) comprend des moyens pour recevoir l'IMSI de la carte SIM (11), et des moyens pour demander un triplet GSM à un registre de localisation nominal, HLR, (25) correspondant, des valeurs d'authentification pouvant être calculées à partir du triplet GSM et transmises à la carte SIM,
le système comprend un module d'authentification (25) avec des moyens pour effectuer une mise à jour de localisation dans le HLR (25) après une authentification réussie au moyen des valeurs d'authentification et de l'algorithme d'authentification GSM sur la carte SIM (11),
le registraire SIP (51) comprend des moyens pour sauvegarder les données de localisation du noeud IP (10) dans la base de données de localisation, ledit noeud IP (10) pouvant être validé pour des services de téléphonie et de visiophonie sur IP, et
pendant un appel du noeud IP (10), des données de facturation indiquant l'identité du noeud IP et la durée de l'appel peuvent être détectées pour le registraire SIP (51) et transmises avec des enregistrements des détails de l'appel à un module de facturation, ledit module de facturation permettant de créer, selon les données de facturation du module d'enregistrement (51) et les enregistrements des détails de l'appel, des fichiers de facturation et de les transmettre à un module de compensation avec des instructions de facturation.

6. Système selon la revendication 5, **caractérisé en ce que** les données d'authentification répondent à la norme GSM.

7. Système selon l'une quelconque des revendications précédentes 5 ou 6, **caractérisé en ce que** le registraire SIP (51) est un registre SIP.

8. Système selon l'une quelconque des revendications précédentes 5 à 7, **caractérisé en ce que** la transmission des données d'authentification ainsi que des données d'enregistrement du noeud IP (10) au registraire SIP (51) s'effectue par une interface sans contact.

9. Système selon l'une quelconque des revendications précédentes 5 à 8, **caractérisé en ce que** le noeud IP (10) est un téléphone mobile compatible IP.
